# EUROPÄISCHE PATENTSCHRIFT

(11) **EP 1 837 571 B1**
(45) Veröffentlichungstag und Bekanntmachung des Hinweises auf die Patenterteilung: **16.10.2019**
(21) Anmeldenummer: 07005631.2
(22) Anmeldetag: 20.03.2007
(51) Int. Cl.: F16L 3/24, F16B 2/24

(54) **Befestigungsvorrichtung**
Attachment device
Dispositif de fixation

(30) Priorität: 24.03.2006 DE 102006014170; 07.02.2007 DE 102007005964
(43) Veröffentlichungstag der Anmeldung: 26.09.2007
(73) Patentinhaber: icotek projekt GmbH & Co.KG, 73563 Mögglingen (DE)
(72) Erfinder: Ehmann, Bruno, 73563 Mögglingen (DE)
(74) Vertreter: Dr. Weitzel & Partner

(56) Entgegenhaltungen:
- EP-A2- 0 047 864
- GB-A- 1 269 332
- US-A- 656 274
- US-A- 2 675 201

## Beschreibung

Die Erfindung betrifft eine Befestigungsvorrichtung zum Befestigen eines Kabels an einer Schiene. Dabei geht es insbesondere um Kabel, die an oder in einem Schaltschrank verlegt werden. Statt eines Kabels kommt auch eine sonstige Leitung in Betracht, beispielsweise eine Gasleitung oder eine Wasserleitung.

Es sind Befestigungsvorrichtungen in einer großen Anzahl von Ausführungsformen bekannt geworden. Siehe US 2002/0130237 A1. Dabei ist eine aus Blech hergestellte Schirmklemme zum Einklemmen eines Kabels einteilig mit einem Fortsatz, der an einem Untergrund montiert werden kann. Zum Montieren bedarf es einer Verschraubung.

FR 2 417 027 beschreibt eine Befestigungsvorrichtung, umfassend eine Aufnahmehülse zum Aufnehmen eines Kabels mit einem Fuß zum Fixieren an einem anderen Gegenstand, beispielsweise an einer Schiene. Die Vorrichtung besteht jedoch aus zwei oder mehreren Teilen, die miteinander vereinigt werden müssen.

FR 1 377 579 beschreibt eine Befestigungsvorrichtung, umfassend einen Fuß zum Fixieren an einer Schiene, und hiermit einteilig eine Kabelklemme. Die Kabelklemme vermag jedoch nicht die notwendige Spannkraft auf das Kabel aufzubringen und ist daher nicht zuverlässig. Ähnliches gilt für die Befestigungsvorrichtung gemäß FR 2 089 473 A1 sowie für US 5 667 177.

GB 1 233 887, GB 1 269 332 und US 2 459 307 zeigen Befestigungsvorrichtungen, die umständlich im Aufbau und teuer in der Herstellung und in der Montage sind.

Die Vorrichtungen gemäß FR 2 045 058 und DE 92 00 232 U1 sind nicht zuverlässig an einer Schiene fixierbar.

Zum Führen von elektrischen Leitungen an T-Trägern oder Doppel-T-Trägern beschreibt die US 2,675,201 A eine Befestigungsklemme mit einer geschlossenen Kabelöse.

Ferner ist GB 1 269 332 bekannt. Diese beschreibt einen Kabelclip, welcher eine Kabel paralell zu einem T-Träger oder Doppel-T-Träger an dem der Clip befestigbar ist, führen kann.

Eine Verbindung von Trägern über metallische Clips im Bereich der Bautechnik beschreibt die 656,274 A.

Auf die EP 0 047 864 A2 kann zum weiteren Allgemeinen Stand der Technik verwiesen werden.

Der Erfindung liegt die Aufgabe zugrunde, eine Befestigungsvorrichtung zum Tragen eines Kabels oder einer Leitung und zu ihrer Fixierung an einer Schiene zu schaffen, die einfach im Aufbau, kostengünstig in der Herstellung, leicht in der Montage und zuverlässig im Betrieb ist.

Eine solche Befestigungsvorrichtung ist im Anspruch 1 definiert.

Die Vorrichtung besteht aus zwei Bauteilen, nämlich einer Schirmklemme, die ein Kabel oder einen Leiter mit zwei Federelementen umschließt, ferner einen Fuß zum Anschließen an einer Schiene. Schirmklemme und Fuß sind aus einem einzigen Blechteil herausgestanzt. Fuß und Schirmklemme sind miteinander verbunden, beispielsweise mittels einer Niete.

Die Erfindung ist anhand der Zeichnung näher erläutert. Darin ist im einzelnen folgendes dargestellt:
- Figur 1: zeigt eine Befestigungsvorrichtung, montiert an einer Schiene, in einer perspektivischen Darstellung.
- Figur 2: zeigt von der Befestigungsvorrichtung gemäß Figur 1 den Fuß, wiederum in einer perspektivischen Darstellung.
- Figur 3: ist eine Schnittansicht durch den Fuß; der Schnitt ist hierbei in der Längsmittelebene des Fußes gelegt - Schnittebene A-A in Figur 4.
- Figur 4: zeigt eine Draufsicht auf den Fuß.
- Figur 5: zeigt in vergrößerter Darstellung eine Schnittansicht, wiederum gelegt durch den Fuß, jedoch in DER Schnittebene B-B in Figur 4.

Die Befestigungsvorrichtung umfasst eine Schirmklemme 1. Diese ist im vorliegenden Falle aus zwei Federbeinen 1.1 und 1.2 gebildet, ferner aus einer Basis 1.3. Die Federbeine 1.1 und 1.2 bilden mit ihren freien Enden eine Aufnahmetülle zum Einstecken eines Kabels.

Die Basis 1.3 muss nicht unbedingt vorhanden sein. Vielmehr könnten die beiden Federbeine 1.1 und 1.2 auch unmittelbar ineinander übergehen.

In jedem Falle ist die Schirmklemme 1 einteilig. Sie ist aus einem Blechstreifen ausgestanzt und zurechtgebogen.

Der Fuß 2 umfasst zwei Schenkel 2.1 und 2.2, einen Steg 2.3, der die beiden Schenkel 2.1, 2.2 miteinander verbindet, und einen Anschlussstreifen 2.4. Der Anschlussstreifen 2.4 ist dadurch gebildet, dass er aus dem einen der beiden Schenkel, nämlich aus dem Schenkel 2.1, herausgestanzt und derart umgebogen ist, dass er in die Gegenrichtung weist, als die beiden Schenkel 2.1 und 2.2. Anschlussstreifen 2.4 dient zum Anschließen an die Schirmklemme 1. Das Anschließen kann auf jegliche Art vorgenommen werden, beispielsweise mittels eines Niets.

Aus dem einen der beiden Schenkel, nämlich aus Schenkel 2.2, sind zwei Krampen 2.5, 2.6 teilweise herausgedrückt, so dass sie aber noch in der dargestellten Weise mit dem Schenkel 2.2 fest verbunden bleiben. Das freie Ende des Schenkels 2.2 ist nach unten geringfügig abgekröpft.

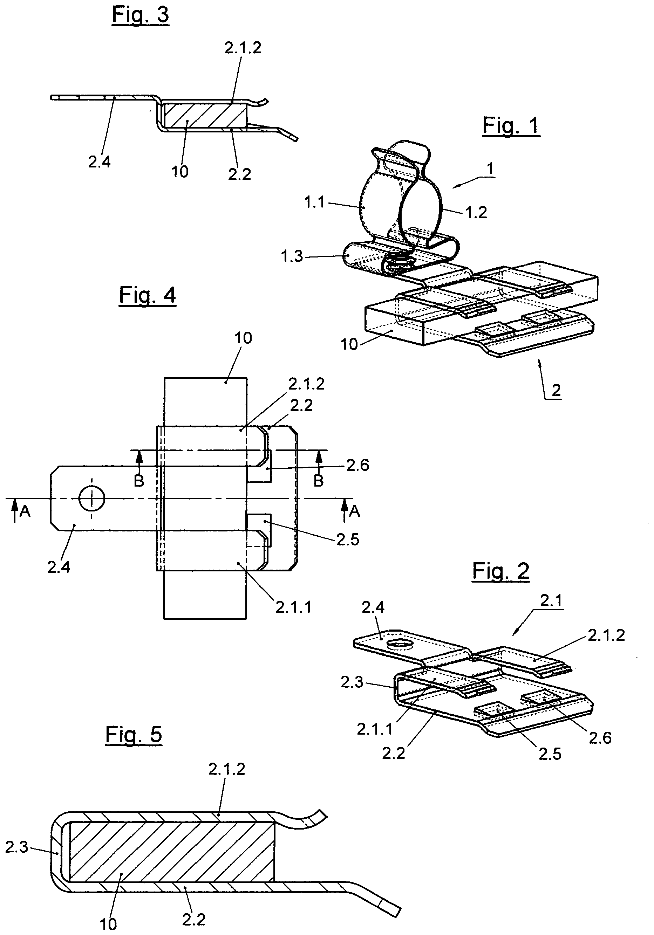

Der andere Schenkel 2.1 besteht aus den beiden Streifen 2.1.1 und 2.1.2. Die freien Enden dieser beiden Streifen sind ebenfalls abgekröpft, so wie aus den Figuren 3 und 5 gut ersichtlich. Sie sind außerdem gerundet, so dass der letzte Bereich der freien Enden nach oben weist, um ein leichtes Einführen einer Tragschiene 10 zu ermöglichen.

Wie man insbesondere aus den Figuren 1 und 3 erkennt, ist die Tragschiene 10 im Fuß 2 zuverlässig gehalten. Die beiden Streifen 2.1.1 und 2.1.2 liegen an ihrer einen Breitseite an, und der Schenkel 2.2 an ihrer anderen Breitseite. Die beiden Krampen 2.5, 2.6 verhindern ein Abziehen des Fußes von der Schiene.

### Bezugszeichenliste

- 1: Schirmklemme
- 1.1: Federbein
- 1.2: Federbein
- 1.3: Basis
- 2: Fuß
- 2.1: Schenkel
- 2.1.1: Schenkelstreifen
- 2.1.2: Schenkelstreifen
- 2.2: Schenkel
- 2.3: Steg
- 2.4: Anschlussstreifen
- 2.5: Krampen
- 2.6: Krampen
- 10: Tragschiene

## Patentansprüche

1. Befestigungsvorrichtung
1.1 mit einer Schirmklemme (1) zum Aufnehmen eines Kabels oder einer Leitung, welche zwei Federbeine (1.1, 1.2) zum Umfassen des Kabels oder der Leitung aufweist;
1.2 mit einem Fuß (2) zum Anschließen an eine Schiene (10);
1.3 der Fuß (2) umfasst zwei Schenkel (2.1, 2.2) sowie einen Steg (2.3), die in einer Seitenansicht gesehen U-förmig sind;
1.4 der eine (2.1) der beiden Schenkel (2.1, 2.2) ist in Stegstreifen (2.1.1, 2.1.2) unterteilt;
1.5 ein zwischen den Stegstreifen (2.1.1, 2.1.2) verbleibender Anschlussstreifen (2.4) ist derart umgebördelt, dass er in die entgegengesetzte Richtung wie die beiden Stegstreifen (2.1.1, 2.1.2) weist;
1.6 die Schirmklemme (1) weist ferner eine Basis (1.3) auf, die am Anschlussstreifen (2.4) fixiert ist; **dadurch gekennzeichnet, dass**
1.7 aus einem der beiden Schenkel (2.1, 2.2) Krampen (2.5, 2.6) derart herausgedrückt sind, dass sie noch federnd mit dem betreffenden Schenkel (2.1, 2.2) in Verbindung stehen und bei einem Einschieben der Schiene (10) deren Herausziehen verhindern, indem die Schiene (10) zwischen dem Steg (2.3) und den Krampen (2.5, 2.6) zu liegen kommt.

2. Befestigungsvorrichtung nach Anspruch 1, **dadurch gekennzeichnet, dass** die freien Enden der Federbeine (1.1, 1.2) eine Aufnahmetülle zum Aufnehmen des Kabels oder der Leitung miteinander bilden.

## Claims

1. Fastening device
1.1 having a shield clamp (1) for accommodating a cable or a conduit, which comprises two spring struts (1.1, 1.2) for enclosing the cable or conduit;
1.2 having a foot (2) for connecting to a rail (10);
1.3 the foot (2) comprises two legs (2.1, 2.2) and a web (2.3) which are U-shaped when viewed in a side view;
1.4 one (2.1) of the two legs (2.1, 2.2) is divided into web strips (2.1.1, 2.1.2);
1.5 a connecting strip (2.4) remaining between the web strips (2.1.1, 2.1.2) is flanged in such a way that it faces in the opposite direction relative to the two web strips (2.1.1, 2.1.2);
1.6 the shield clamp (1) further comprises a base (1.3) fixed to the connecting strip (2.4);
**characterized in that**
1.7 bar strips (2.5, 2.6) are pressed out of one of the two legs (2.1, 2.2) in such a way that they are still resiliently connected to the respective leg (2.1, 2.2) and, when the rail (10) is pushed in, prevent it from being pulled out **in that** the rail (10) comes to rest between the web (2.3) and the bar strips (2.5, 2.6).

2. Fastening device according to claim 1, **characterized in that** the free ends of the spring struts (1.1, 1.2) form a receiving bushing for accommodating the cable or conduit together.

## Revendications

1. Dispositif de fixation
1.1 avec une pince de blindage (1) pour la réception d'un câble ou d'une ligne, qui présente deux jambes élastiques (1.1, 1.2) pour enserrer le câble ou la ligne ;
1.2 avec un pied (2) pour le raccordement à un rail (10) ;
1.3 lequel pied (2) comprend deux branches (2.1, 2.2) et une partie de liaison (2.3) qui sont en forme de U lorsqu'elles sont vues de côté ;
1.4 l'une (2.1) des deux branches (2.1, 2.2) est divisée en bandes (2.1.1, 2.1.2) ;
1.5 une bande de raccordement (2.4) restant entre les bandes (2.1.1, 2.1.2) est rabattue de telle sorte qu'elle pointe dans la direction opposée aux deux bandes (2.1.1, 2.1.2) ;
1.6 la pince de blindage (1) présente en outre une base (1.3) qui est fixée à la bande de raccordement (2.4) ;
**caractérisé en ce que**
1.7 des pattes (2.5, 2.6) sont repoussées de l'une des deux branches (2.1, 2.2) de façon qu'elles soient toujours en liaison élastique avec la branche concernée (2.1, 2.2) et, lorsque le rail (10) est inséré, empêchent son extraction, le rail (10) venant se placer entre la partie de liaison (2.3) et les pattes (2.5, 2.6).

2. Dispositif de fixation selon la revendication 1, **caractérisé en ce que** les extrémités libres des jambes élastiques (1.1, 1.2) forment ensemble une douille de réception destinée à recevoir le câble ou la ligne.
